Europäisches Patentamt

European Patent Office

Office européen des brevets

(19)

(11) Veröffentlichungsnummer: **0 140 080**
**B1**

(12) # EUROPÄISCHE PATENTSCHRIFT

(45) Veröffentlichungstag der Patentschrift:
**22.04.87**

(51) Int. Cl.⁴: **G 01 M 13/02**

(21) Anmeldenummer: **84110779.0**

(22) Anmeldetag: **10.09.84**

(54) Prüfverfahren und Prüfvorrichtung zur Fertigungs-Endkontrolle elektrischer Antriebe mit geringer Antriebsdrehzahl.

(30) Priorität: **22.09.83 DE 3334363**

(43) Veröffentlichungstag der Anmeldung:
**08.05.85 Patentblatt 85/19**

(45) Bekanntmachung des Hinweises auf die Patenterteilung:
**22.04.87 Patentblatt 87/17**

(84) Benannte Vertragsstaaten:
**DE FR GB IT SE**

(56) Entgegenhaltungen:
**DE - B - 1 076 967**

**SOVIET INVENTIONS ILLUSTRATED DERWENT, Week
E41, 24. November 1982, London, GB**

(73) Patentinhaber: **Siemens Aktiengesellschaft Berlin und
München, Wittelsbacherplatz 2, D-8000 München 2 (DE)**

(72) Erfinder: **Greubel, Peter, Dipl.-Ing. (FH),
Höhenstrasse 44, D-8730 Bad Kissingen (DE)**

## Beschreibung

Die Erfindung bezieht sich auf ein Prüfverfahren und eine Prüfvorrichtung zur Fertigungs-Endkontrolle elektrischer Antriebe mit geringer Abtriebsdrehzahl, insbesondere für Kfz-Fensterheberantriebe mit hoher Getriebeuntersetzung; eine derartige Prüfung ist durch eine offenkundige Vorbenutzung bekannt.

Im bekannten Fall ist das freie Ende des mit dem Zuggewicht belasteten Zugseils in Drehrichtung der Seilscheibe zumindest so oft um diese umwickelt, bis durch Reibschluss gegenüber der drehenden Seilscheibe eine Kompensation zur Belastung durch das Zuggewicht gegeben ist. Bei Prüfung des Antriebes in entgegengesetzter Drehrichtung ist entsprechend der Wickelsinn des Zugseiles zu ändern. Die Stromaufnahme erfolgte bei dem bekannten Verfahren mit handelsüblichen Amperemetern; die Abtriebsdrehzahl wurde mit Handtachometer und die Drehrichtung wurde durch Sichtkontrolle überprüft. Zur Messung des Blockiermomentes wurde ein Seil an einer fest aufgehängten Federwaage befestigt und das freie Seilende bei laufender Prüfung so lange um die Seilscheibe geschlungen, bis die Prüfung blockiert war. Die dabei angezeigte Kraft auf der Federwaage wurde abgelesen und das Blockiermoment errechnet.

Aufgabe der vorliegenden Erfindung ist die möglichst weitgehend automatisch und ohne grossen Zeitaufwand zu bewerkstelligende Endkontrolle von elektrischen Antrieben mit geringer Abtriebsdrehzahl, insbesondere von Antrieben mit hoher Getriebeuntersetzung wie z.B. Kfz-Fensterheberantrieben; während der Endkontrolle ist dabei der Antrieb zumindest hinsichtlich folgender Werte bei entsprechend simulierten Belastungszuständen zu überprüfen:

a) Anlauf des Prüflings gegen eine vorgegebene Belastung,

b) Erfassen der Stromaufnahme, der Drehrichtung und der Antriebsdrehzahl des Prüflings unter Belastung,

c) Erfassen des Blockiermomentes des Prüflings, insbesondere der Schliesskraft der von einem Fensterheberantrieb in einem Kfz zu schliessenden Fensterscheibe.

Die Prüfwerte müssen dabei in beiden Drehrichtungen möglichst schnell erfasst werden können.

Die Lösung dieser Aufgabe gelingt erfindungsgemäss durch das im Patentanspruch 1 angegebene Prüfverfahren; die Gegenstände der Ansprüche 2 bis 5 kennzeichnen vorteilhafte Ausgestaltungen dieses Prüfverfahrens. Der Patentanspruch 6 beschreibt eine erfindungsgemässe Prüfvorrichtung zur Durchführung des vorgenannten Prüfverfahrens, die Unteransprüche 7 und 8 enthalten vorteilhafte Ausgestaltungen der Prüfeinrichtung gemäss Patentanspruch 6.

Die erfindungsgemässe Prüfeinrichtung erlaubt es in der kurzen Zeit von z.B. nur ca. einer Umdrehung der Antriebswelle des Prüflings die gesamte Endkontrolle in der einen Drehrichtung durchzuführen; lediglich durch Umkehren der Drehrichtung kann direkt anschliessend ohne Notwendigkeit eines Umrüstens der Prüfvorrichtung der Prüfling auch in Gegendrehrichtung untersucht werden.

Die Steuerung des Prüfablaufs und die Auswertung der Messergebnisse übernimmt in vorteilhafter Weise ein Mikroprozessor. Die Ansteuerung der notwendigen Winkelpositionen der Seilscheibe bzw. der mit dieser gekuppelten Abtriebswelle erhält der Mikroprozessor in zweckmässiger Weise von einem Drehgeber, insbesondere einem inkrementalen Drehgeber, der mit der Abtriebswelle gekuppelt ist und gleichzeitig auch zur Kennung der Drehrichtung mitbenutzt wird.

Der vollautomatisch zu bewerkstelligende Prüfablauf ist ausgehend von einer durch das Zuggewicht ZG zwar zugbelasteten, jedoch momentan unbelasteten Startposition 0° der Seilscheibe ausgehenden Messablauf durch folgende Verfahrensschritte gekennzeichnet:

a) im Drehwinkelbereich 0° bis ± 90° wird die Drehrichtung des Antriebes ermittelt,

b) in der Drehwinkelposition ± 90° wird der Antrieb kurz abgeschaltet,

c) unmittelbar nach anschliessender Wiederanschaltung wird das Anlaufverhalten unter Last geprüft,

d) nach einer Beruhigungsphase wird im Drehwinkelbereich ± 180 bis ± 270° aufgrund einer Zeitmessung die Nenndrehzahl errechnet,

e) nach blockiertem Endhalt im Drehwinkelbereich ± 270° bis ± 360° werden nach Stillstandserkennung durch den Drehgeber (DR) die Zugkraft des blockierten und zuggewichtbelasteten Antriebs gemessen und das Blockiermoment berechnet.

Die Erfindung sowie weitere vorteilhafte Ausgestaltungen der Erfindung werden im folgenden anhand eines schematisch dargestellten Ausführungsbeispiels einer Prüfvorrichtung in der Zeichnung näher erläutert; darin zeigen:

Fig. 1 die Seitenansicht einer Montagestrecke für Kfz-Fensterheberantriebe mit oberhalb eines Transportbandes angeordneter Prüfvorrichtung,

Fig. 2 in einer Draufsicht auf die Seilscheibe der Prüfeinrichtung die Angabe der von der Seilscheibe nacheinander während einer Umdrehung anzufahrenden Winkelpositionen.

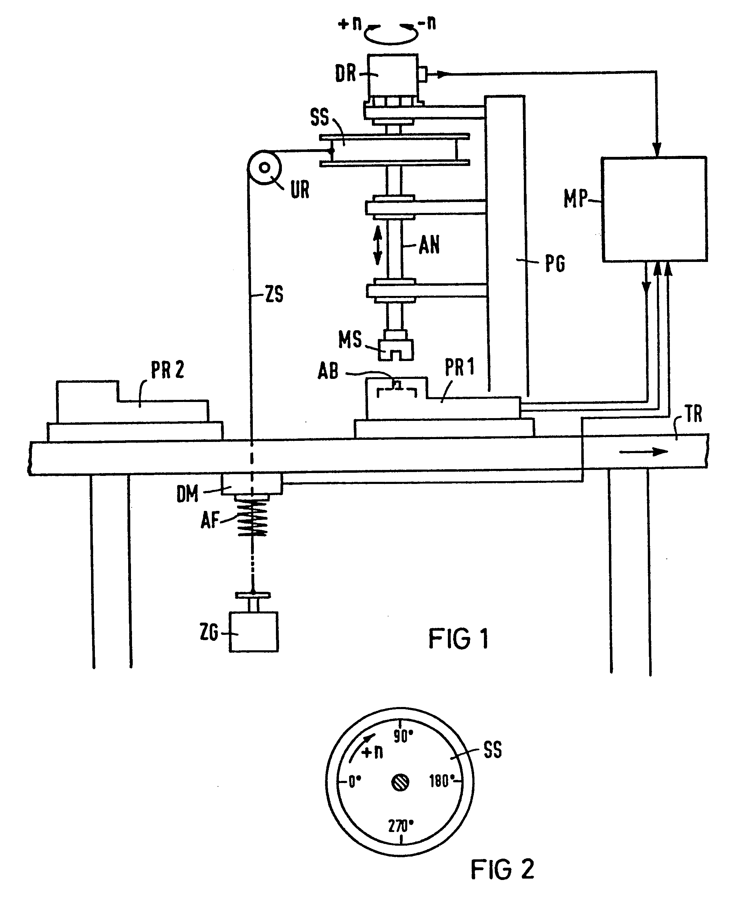

Gemäss Fig. 1 werden in eine Montagestrecke für Kfz-Fensterheberantriebe auf einem Transportband TR in der mit einem Richtungspfeil eingetragenen Transportrichtung Prüflinge PR1 bzw. PR2 usw. von links nach rechts zu einer oberhalb des Transportbandes TR angeordneten Prüfvorrichtung transportiert. Diese Prüfvorrichtung ist erfindungsgemäss durch folgende Merkmale gekennzeichnet:

a) mit der Abtriebsachse (AB) des zu prüfenden Antriebes (Prüfling PR1) ist eine Mitnehmerscheibe (MS) kuppelbar,

b) mit einer Mitnehmerscheibe (MS) steht eine Seilscheibe (SS) in Drehverbindung,

c) auf die Seilscheibe (SS) ist bei deren Drehantrieb durch den zu prüfenden elektrisch angeschlossenen Antrieb (Prüfling PR1) ein Zugseil (ZS) mit seinem einen Ende aufwickelbar, an dessen anderem Ende ein das Zugseil (ZS) zugbelastendes Zuggewicht (ZG) befestigt ist,

d) jede weitere gleichgerichtete Drehung der Seilscheibe (SS) ist nach spätestens einer Umdrehung (0°-360°) durch einen Anschlag mit einer Druckmessvorrichtung (DM) hemmbar, gegen die das Zuggewicht (ZG) dabei mittel- oder unmittelbar angezogen ist,

e) mit der Seilscheibe (SS) steht ein Drehgeber (DR) in Drehverbindung,

f) mit dem Drehgeber (DR) und dem Antrieb (PR1) ist eine Steuer- bzw. Messvorrichtung (MP) verbunden, durch die kurz nach einem zuggewichtbelasteten Anlauf des Antriebs Anlauf-Kenngrössen, anschliessend Betriebs-Kenngrössen und während des Endhalts Blockier-Kenngrössen des Antriebs feststellbar sind.

Wie aus Fig. 1 weiterhin ersichtlich, ist die Mitnehmerscheibe MS über eine Antriebsachse AN direkt mit der Seilscheibe SS und mit dem inkrementalen Drehgeber DR verbunden. Die Antriebsachse AN ist in einem Prüfeinrichtungs-Gerüst PG zur Ankopplung bzw. Abkopplung mit der Abtriebsachse AB des Prüflings senkrecht verstellbar geführt gelagert. Das im Gegensatz zur vorbenutzten Lösung an der Seilscheibe SS befestigte, bei der Drehung der Seilscheibe SS auf diese aufgewickelte Zugseil ZS ist zunächst waagrecht zur Wicklungslage des um die Seilscheibe SS umzuwickelnden Zugseiles ZS und anschliessend über eine Umlenkrolle UR senkrecht zu dem unterhalb des Transportbandes TR im Abstand zu der am Transport-Gerüst befestigten Druckmessvorrichtung DM geführt.

Die vollautomatisch zu bewerkstelligende Prüfung der Prüflinge läuft im einzelnen wie folgt ab:

Am Ende der Fensterheber-Montagestrecke wird die Belastungseinrichtung, bestehend aus Seilscheibe SS, Druckseil ZS, Umlenkrolle UR und Zuggewicht ZG pneumatisch nach unten bewegt, bis die Mitnehmerscheibe MS an der Abtriebswelle AB des auf dem Transportband TR in entsprechende Position gebrachten Prüflings PR einrastet. Gleichzeitig wird der elektrische Antrieb des Prüflings PR1 automatisch mit einer Speisespannung kontaktiert, so dass der Antrieb mit dem Hochlauf aus seiner Statorposition 0° beginnen kann. Das Zugseil ZS ist mit seinem oberen Ende an der Seilscheibe SS derart befestigt, dass in dieser Position noch kein Hebelarm zwischen der Zugseilkraft und dem Drehmittelpunkt der Seilscheibe SS besteht.

Zwischen der Winkelposition 0° und 90° werden zunächst die Impulse des inkrementalen Drehgebers DR dazu benutzt, die Drehrichtung des Prüflings zu erkennen.

Bei der Winkelposition 90° ist der Prüfling mit seinem vollen maximalen Moment belastet, da nunmehr der Hebelarm zwischen der von dem Zuggewicht ZG über das Zugseil ZS anstehenden Zugkraft und dem Drehmittelpunkt der Seilscheibe SS seinen grössten Wert erreicht hat. Hebelarm und Zuggewicht sind derart aufeinander abgestimmt, dass dadurch das gewünschte Belastungsmoment für den zu prüfenden Antrieb des Prüflings PR1 gewährleistet sind. In der Winkelposition 90° wird durch elektrische Abschaltung des Prüflings PR1 die Drehung der Abtriebsachse AB und damit der Antriebsachse AN sowie der Seilscheibe SS kurz angehalten.

Wegen der Selbsthemmung des im vorliegenden Fall als Prüfling vorgesehenen Kfz-Fensterheberantriebes mit Schneckengetriebe sind keine besonderen Massnahmen zur Rücklaufsperrung notwendig. Anschliessend wird der elektrische Antrieb des Prüf-lings PR1 wieder mit seiner Speisespannung kontaktiert, so dass er nunmehr gegen die definierte Belastung anlaufen muss und somit das vorgeschriebene Anzugsmoment überprüft werden kann.

Bis zum Erreichen der Winkelposition 180° ist in zweckmässiger Weise eine Beruhigungsphase vorgesehen, in der sich z.B. Einschaltstromspitzen abbauen und der Motor seine Nenndrehzahl erreichen kann.

Von der Winkelposition 180° bis zur Winkelposition 270° wird vom Mikroprozessor MP eine Zeitmessung für den Durchlauf während dieses Winkelbereiches durchgeführt und daraus die Drehzahl des Prüflings im Nennbetrieb errechnet bzw. überprüft. Unmittelbar nach der Drehzahlmessung wird vom Mikroprozessor MP die Stromaufnahme erfasst.

Ab der Winkelposition 270° läuft der Antrieb des Prüflings und damit der Seilscheibe SS noch so lange weiter, bis das belastende Zuggewicht ZG die einen zu harten Anschlag hemmende Anschlagfeder AF erreicht und schliesslich zusammengedrückt hat. In dieser Stellung wird der Antrieb des Prüflings PR1 schliesslich blockiert. Die Stillstandserkennung des Antriebs wird über den inkrementalen Drehgeber DR gemeldet und anschliessend wird die dabei auf die Druckmessvorrichtung wirkende Druckkraft erfasst. Diese Druckkraft ist der Schliesskraft des Fensters im Kfz proportional, während das Gewicht der Fensterscheibe sowie der zu überwindenden Reibungskräfte bei der Schliessung des Fensters durch das Zuggewicht ZG selbst repräsentiert werden.

Aus dieser gemessenen Druckkraft F, die vorteilhafterweise als Spannungswert $U = f(F)$ eines Piezoquarzes mit Ladungsverstärker an den Mikroprozessor weitergegeben wird, berechnet dieser unter Berücksichtigung des zwischen Zugseil und Seilscheibe wirksamen Hebelarms das Blockiermoment.

Die Länge des Zugseils ZS ist selbstverständlich derart zu bemessen, dass einerseits bei Anlauf des Antriebes und dementsprechend bei Drehung der Seilscheibe SS aus der Winkelposition 0° bereits die Belastung durch das Zuggewicht ZG gegeben ist und andererseits vor bzw. bei Erreichen der Winkelposition 360° der Antrieb durch Anschlag des Zuggewichtes ZG an der Druckmessvorrichtung blockiert ist.

Anschliessend wird die Drehrichtung des Prüflings umgekehrt; die Abtriebsachse des Prüflings und damit die Mitnehmerscheibe MS und über die Antriebsachse AN auch die Seilscheibe SS und der inkrementale Drehgeber DR drehen in entgegengesetzter Richtung −n zurück in ihre Ausgangswinkelposition 0°, wonach unmittelbar anschliessend die Messung des Prüflings mit entgegengesetzter Drehrichtung −n beginnen kann.

Nach Beendigung der gesamten vollautomatisch in beiden Drehrichtungen ablaufenden Messung wird die Belastungseinrichtung pneumatisch nach oben bewegt bis die Mitnehmerscheibe die Antriebsachse des Prüflings PR1 freigibt und der Prüfling PR1 die Prüfstation verlassen kann.

## Patentansprüche

1. Prüfverfahren zur Fertigungs-Endkontrolle elektrischer Antriebe mit geringer Abtriebsdrehzahl, insbesondere für KFZ-Fensterheberantriebe mit hoher Getriebeuntersetzung, bei dem mit Hilfe einer mit der Abtriebswelle (AB) des Antriebes kuppelbaren Seilscheibe (SS), eines mit seinem einen Ende um die Seilscheibe (SS) wickelbaren Zugseiles (ZS) und eines an dessen anderem Ende befestigten Zuggewichtes (ZG) verschiedene Belastungszustände des jeweils entsprechend elektrisch angeschlossenen Antriebes simulierbar sind, dadurch gekennzeichnet, dass das Zugseil (ZS) auf die von der Abtriebswelle (AB) angetriebene Seilscheibe (SS) während ihrer Drehung aufgewickelt sowie jede weitere gleichgerichtete Drehung der Seilscheibe (SS) durch eine zugseilseitige Anschlagbegrenzung in Form einer Anschlag-Druckmessvorrichtung (DM) in einem Endhalt gehemmt wird und dass während der Drehung der Seilscheibe (SS) zunächst kurz nach einem zuggewichtbelasteten Anlauf des Antriebs Anlauf-Kenngrössen, anschliessend Betriebs-Kenngrössen und während des Endhalts Blockier-Kenngrösse des Antriebes gemessen bzw. berechnet werden.

2. Prüfverfahren nach Anspruch 1, dadurch gekennzeichnet, dass die Drehrichtung und die Drehzahl des Antriebs sowie die jeweilige Drehwinkelposition der Seilscheibe (SS) durch einen mit der Abtriebswelle (AB) bzw. der Seilscheibe (SS) in Drehverbindung stehenden Drehgeber (DR), insbesondere einen inkrementalen Drehgeber, erfasst werden.

3. Prüfverfahren nach Anspruch 1 oder 2, dadurch gekennzeichnet, dass die von dem Drehgeber bzw. dem Antrieb abgegebenen Messwerte bzw. die an den Antrieb abzugebenden Steuerwerte in einem zentralen Mess- und Steuergerät, insbesondere in einem Mikroprozessor (MP), ver- bzw. erarbeitet werden.

4. Prüfverfahren nach einem der Ansprüche 1 bis 3, dadurch gekennzeichnet, dass nach Beendigung der letzten Messung des in der einen Drehrichtung (+n) angetriebenen Antriebs dessen Drehrichtung umgekehrt und nach Zurückdrehen der Seilscheibe (SS) in ihre Ausgangsposition (0°) durch Antrieb der Seilscheibe (SS) in entgegengesetzter Drehrichtung (−n) der Antrieb in Gegendrehrichtung geprüft wird.

5. Prüfverfahren nach einem der Ansprüche 1 bis 4, gekennzeichnet durch folgenden, von einer durch das Zuggewicht (ZG) zwar zugbelasteten, jedoch momentan unbelasteten Startposition 0° der Seilscheibe (SS) ausgehenden Messablauf:
a) im Drehwinkelbereich 0° bis ± 90° wird die Drehrichtung des Antriebes ermittelt,
b) in der Drehwinkelposition ± 90° wird der Antrieb kurz abgeschaltet,
c) unmittelbar nach anschliessender Wiederanschaltung wird das Anlaufverfahren unter Last geprüft,
d) nach einer Beruhigungsphase wird im Drehwinkelbereich ± 180° bis ± 270° aufgrund einer Zeitmessung die Nennzahl errechnet,
e) nach blockiertem Endhalt im Drehwinkelbereich ± 270° bis ± 360° werden nach Stillstandserkennung durch den Drehgeber (DR) die Druckkraft des blockierten und zuggewichtbelasteten Antriebes an der Anschlag-Druckmessvorrichtung (DM) gemessen und das Blockiermoment berechnet.

6. Prüfvorrichtung zur Durchführung des Prüfverfahrens nach einem der Ansprüche 1 bis 5, mit einer mit der Abtriebswelle (AB) des Antriebes kuppelbaren Seilscheibe (SS) und einem mit seinem einen Ende um die Seilscheibe (SS) wickelbaren Zugseil (ZS), an dessen anderem Ende ein Zuggewicht (ZG) befestigt ist, gekennzeichnet durch folgende Merkmale:
a) mit der Antriebsachse (AB) des zu prüfenden Antriebes (PR1) ist eine Mitnehmerscheibe (MS) kuppelbar,
b) mit der Mitnehmerscheibe (MS) steht die Seilscheibe (SS) in Drehverbindung,
c) auf die Seilscheibe (SS) ist bei deren Drehantrieb durch den zu prüfenden elektrisch angeschlossenen Antrieb (PR1) das Zugseil (ZS) mit seinem einen Ende aufwickelbar,
d) jede weitere gleichgerichtete Drehung der Seilscheibe (SS) ist durch einen Anschlag mit einer Anschlag-Druckmessvorrichtung (DM) hemmbar, gegen die das Zuggewicht (ZG) dabei mittel- oder unmittelbar angedrückt ist,
e) mit der Seilscheibe (SS) steht ein Drehgeber in Drehverbindung,
f) mit der Drehgeber (DR) und dem Antrieb (PR1) ist eine Steuer- bzw. Messvorrichtung (MP) verbunden, durch die kurz nach einem zuggewichtbelasteten Anlauf des Antriebs Anlauf-Kenngrössen, anschliessend Betriebs-Kenngrössen und während des Endhalts Blockier-Kenngrössen des Antriebs feststellbar sind.

7. Prüfvorrichtung nach Anspruch 6, dadurch gekennzeichnet, dass als Steuer- bzw. Messvorrichtung ein Mikroprozessor (MP) vorgesehen ist.

8. Prüfvorrichtung nach Anspruch 6 oder 7, dadurch gekennzeichnet, dass als Drehgeber ein inkrementaler Drehgeber (DR) vorgesehen ist.

## Claims

1. A testing process for the final production inspection of electric drives with a low drive speed, in particular for motor vehicle window raising drives with a high reduction of speed of the transmission, wherein different load conditions of the correspondingly electrically connected drive can be simulated, with the aid of a cable pulley (SS) which can be coupled to the driving shaft (AB) of the drive, a traction cable (ZS) whose one end can be wound around the cable pulley (SS), and a traction weight (ZG) which is secured to the other end of which traction cable, characterised in that during the rotation of the cable pulley (SS) the traction cable (ZS) is wound onto the cable pulley which is driven by the driving shaft (AB), and each further rotation of the cable pulley (SS) in the same direction is restrained in a final stop by a stop boundary at the end of the cable pulley in the form of a stop pressure measuring device (DM), and that during the rotation of the cable pulley (SS) shortly after starting the drive which is loaded by the traction weight firstly starting characteristic magnitudes, subsequently operating characteristic magnitudes, and during the final stop blocking characteristic magnitudes of the drive are measured and/or calculated.

2. A testing process as claimed in Claim 1, characterised in that the direction of rotation and the number of revolutions of the drive and the respective angular rotational position of the cable pulley (SS) are detected by an angular sensor (DR), in particular an incremental angular sensor, which is rotationally connected to the driving shaft (AB) or to the cable pulley (SS).

3. A testing process as claimed in Claim 1 or 2, characterised in that the measured values, which are emitted by the angular sensor or the drive and the control values which are to be emitted to the drive are processed or derived in a central measuring and control apparatus, in particular in a microprocessor (MP).

4. A testing process as claimed in one of Claims 1 to 3, characterised in that when the last measurement of the drive driven in the one direction of rotation (+n) is completed the direction of rotation of the drive is reversed and when the cable pulley (SS) has been turned back into its initial position (0°) by driving the cable pulley (SS) in the opposite direction of rotation (−n) the drive is tested in the opposite direction of rotation.

5. A testing process as claimed in one of Claims 1 to 4, characterised by the following measuring sequence which starts at a start position 0° of the cable pulley (SS) which although it is loaded by the traction weight (ZG) is momentarily unloaded:
a) the direction of rotation of the drive is determined in the region of the angle of rotation of 0° to ± 90°,
b) the drive is temporarily switched off in the position of the angle of rotation of ± 90°,
c) the starting behaviour under load is tested directly after a subsequent re-connection,
d) the nominal figure is calculated as a result of a time measurement in the region of the angle of rotation of ± 180° to ± 270° following a stabilizing phase,
e) following a blocked final stop in the region of the angle of rotation of ± 270° to ± 360°, the compressive force of the blocked drive which is loaded by the traction weight is measured on the stop pressure measuring device (DM), and the blocking moment is calculated after a standstill recognition by the angular sensor (DR).

6. A testing device for the implementation of the testing process as claimed in one of Claims 1 to 5, comprising a cable pulley which can be coupled to the driving shaft (AB) of the drive and comprising a traction cable (ZS) which can be wound about the cable pulley (SS) by means of its one end and at whose other end is secured a traction weight (ZG), characterised by the following features:
a) a carrier disc (MS) can be coupled to the driving axle (AB) of the drive (PR1) to be tasted,
b) the cable pulley (SS) is rotationally connected to the carrier disc (MS),

c) the traction cable (ZS) can have its one end wound onto the cable pulley (SS) during rotating driving thereof by the electrically connected drive (PR1) which is to be tasted,
d) each further rotation of the cable pulley (SS) in the same direction can be blocked by a stop means of a stop pressure measuring device (DM), against which the traction weight (ZG) is directly or indirectly pressed,
e) an angular sensor is rotationally connected to the cable pulley (SS),
f) a control and measuring device (MP) is connected to the angular sensor (DR) and the drive (PR1), by means of which device shortly after starting of the drive which is loaded by the traction weight, starting characteristic magnitudes can be determined, and subsequently operating characteristic magnitudes and blocking characteristic magnitudes of the drive during the final stop may be determined.

7. A testing device as claimed in Claim 6, characterised in that a microprocessor (MP) is provided as a control and measuring device.

8. A testing device as claimed in Claim 6 or 7, characterised in that an incremental angular sensor (DR) is provided as the angular sensor.

**Revendications**

1. Procédé d'essai pour le contrôle en fin de fabrication de commandes électriques à faible vitesse de rotation de sortie, en particulier pour commandes à forte démultiplication pour lève-glaces de véhicules automobiles, par lequel on peut simuler différents états de charge de la commande, convenablement connectée électriquement, à l'aide d'une poulie à câble (SS) accouplable à l'arbre de sortie (AB) de la commande, d'un câble de traction (ZS) enroulable par une extrémité sur la poulie (SS) et d'un poids de traction (ZG) fixé à l'autre extrémité du câble, caractérisé en ce que l'on produit l'enroulement du câble (ZS) sur la poulie (SS) entraînée par l'arbre de sortie (AB), pendant la rotation de la poulie, de même que l'enrayage de toute rotation supplémentaire de la poulie (SS) dans le même sens par une limitation à butée côté câble, sous forme d'un dispositif de butée-mesure de pression (DM) dans un arrêt final et que, pendant la rotation de la poulie (SS), on mesure ou calcule d'abord, peu après le démarrage de la commande sous la charge du poids, des caractéristiques de démarrage, puis des caractéristiques de fonctionnement et, pendant l'arrêt final, des caractéristiques de blocage de la commande.

2. Procédé selon la revendication 1, caractérisé en ce que l'on détermine le sens et la vitesse de rotation de la commande, ainsi que la position angulaire instantanée de la poulie (SS), par un capteur de position angulaire (DR) relié en rotation à l'arbre de sortie (AB) ou la poulie (SS), en particulier par un capteur incrémentiel.

3. Procédé selon la revendication 1 ou 2, caractérisé en ce que l'on traite ou élabore les valeurs de mesure délivrées par le capteur de position angulaire, respectivement les valeurs de commande à délivrer à la commande, dans un appareil central de mesure et de commande, en particulier dans un microprocesseur (MP).

4. Procédé selon une des revendications 1 à 3, caractérisé en ce que, après la fin de la dernière mesure de la commande, mue dans un sens de rotation (+n), on inverse son sens de rotation et, après la rotation en arrière de la poulie (SS) jusqu'à sa position de départ (0°), on contrôle la commande dans l'autre sens de rotation par l'entraînement de la poulie (SS) dans le sens contraire (−n).

5. Procédé selon une des revendications 1 à 4, caractérisé par le déroulement suivant de la mesure, à partir d'une position de départ 0° de la poulie à câble (SS), position où le poids (ZG) est prêt à exercer une charge de traction mais où une charge n'est pas encore appliquée:
a) on détermine le sens de rotation de la commande dans la plage d'angle de rotation 0° à ± 90°,
b) à la position angulaire ± 90°, on arrête la commande brièvement,
c) immédiatement après la remise en marche consécutive, on vérifie le comportement au démarrage sous charge,
d) après une phase de stabilisation, on calcule la vitesse de rotation nominale, dans la plage d'angle de rotation ± 180° à ± 270° et sur la base d'une mesure de temps,
e) après l'arrêt final bloqué, dans la plage d'angle de rotation ± 270° à ± 360°, à la suite de la détection de l'arrêt par le capteur de position (DR), on mesure la force de traction de la commande bloquée contre le dispositif de butée et de mesure de pression (DM) et chargée par le poids et on calcule le couple de blocage.

6. Dispositif d'essai pour la mise en oeuvre du procédé selon une des revendications 1 à 5, comprenant une poulie à câble (SS) accouplable à l'arbre de sortie (AB) de la commande et un câble de traction (ZS) qui est enroulable par une extrémité sur le poulie (SS) et à l'autre extrémité duquel est fixé un poids (ZG) exerçant une traction, caractérisé en ce que:
a) un disque d'entraînement (MS) est accouplable à l'arbre de sortie (AB) de la commande à éprouver (PR1),
b) le disque d'entraînement (MS) est relié en rotation à la poulie à câble (SS),
c) un câble de traction (ZS) peut être enroulé par une extrémité sur la poulie (SS), lorsque celle-ci est entraînée en rotation par la commande à contrôler (PR1), raccordée électriquement,
d) toute rotation supplémentaire de la poulie (SS) dans le même sens peut être enrayée par une butée avec un dispositif de mesure de pression (DM), contre lequel le poids (ZG) est alors tiré directement ou indirectement,
e) la poulie (SS) est relié en rotation à un capteur de position angulaire (DR),
f) le capteur de position angulaire (DR) et la commande (PR1) sont connectés à un dispositif de commande et de mesure (MP) au moyen duquel on peut déterminer, peut après un démarrage de la commande sous la charge constituée par le poids, des caractéristiques de démarrage, puis des caractéristiques de service et, pendant l'arrêt final, des caractéristiques de blocage de la commande.

7. Dispositif selon la revendication 6, caractérisé en ce que le dispositif de commande et de mesure est un microprocesseur (MP).

8. Dispositif selon la revendication 6 ou 7, caractérisé en ce que le capteur de position angulaire est un capteur incrémentiel (DR).

FIG 1

FIG 2